# EUROPEAN PATENT SPECIFICATION

(11) **EP 2 979 977 B1**
(45) Date of publication and mention of the grant of the patent: **15.08.2018**
(21) Application number: 14776202.5
(22) Date of filing: 28.01.2014
(51) Int. Cl.: B64C 3/34, B32B 5/00, B32B 7/02, B60K 15/03, B64D 45/02, H01M 8/00, H01M 8/04, B32B 15/08, B32B 1/02

(54) **FUEL TANK, MAIN WINGS, AIRCRAFT FUSELAGE, AIRCRAFT, AND MOVING BODY**
KRAFTSTOFFTANK, HAUPTTRAGFLÄCHEN, FLUGZEUGRUMPF, FLUGZEUG UND BEWEGLICHER KÖRPER
RÉSERVOIR À CARBURANT, AILES PRINCIPALES, FUSELAGE D'AÉRONEF, AÉRONEF ET CORPS MOBILE

(30) Priority: 26.03.2013 JP 2013064444
(43) Date of publication of application: 03.02.2016
(73) Proprietor: Mitsubishi Heavy Industries, Ltd., Tokyo 108-8215 (JP)
(72) Inventor: KAMIHARA, Nobuyuki, Tokyo 108-8215 (JP); KISHIMOTO, Kazuaki, Tokyo 108-8215 (JP); ABE, Toshio, Tokyo 108-8215 (JP); KAMINO, Yuichiro, Tokyo 108-8215 (JP)
(74) Representative: Henkel, Breuer & Partner
(86) International application number: PCT/JP2014/051831
(87) International publication number: WO 2014/156274

(56) References cited:
- WO-A1-99/51494
- WO-A1-2011/050040
- JP-A- 2007 521 995
- JP-A- 2010 132 286
- JP-A- 2010 235 133
- US-A- 4 556 591
- US-A- 4 755 904
- US-A- 6 114 050
- US-A1- 2010 219 287
- US-A1- 2011 255 205
- US-B1- 6 327 132
- US-B1- 6 327 132

## Description

### TECHNICAL FIELD

The present invention relates to fuel tanks, main wings, aircraft fuselages, aircraft, and moving bodies that use carbon fiber reinforced plastic in structural members.

A main wing of an aircraft may be used as a fuel tank capable of storing fuel. A fuel tank that forms an integral part of the main wing, the wing structure having a liquid-tight structure that prevents fuel leakage, is referred to as an integral tank. Composite materials such as carbon fiber reinforced plastic (CFRP) tend to be used for integral tanks with the goal of reducing weight. In CFRP, carbon fibers are used as a reinforcing material, and a synthetic resin is used as a matrix.

JP 2007-301838A discloses an invention of a three-dimensional fiber-reinforced resin composite material in which selvage threads are formed from a conductive material having a higher level of conductivity than in-plane directional threads in order to impart the fiber-reinforced resin composite material with conductivity without reducing productivity. JP 2010-280904A discloses an invention of a prepreg and a carbon-fiber-reinforced composite material in which conductive particles or fibers are included in order to provide both superior impact resistance and conductivity. JP 2011-168792A discloses an invention of an enhanced composite material that contains conductive particles dispersed within a polymer resin in order to impart conductivity while substantially or entirely avoiding increased weight over a standard composite material.

US 4556591A discloses an internal fuel tank of an aircraft formed from graphite reinforced epoxy plates which are secured together at overlapping surfaces by dielectric coated metal fasteners in the form of bolts or rivets. Between the overlapping surfaces resin seals are provided. Each plate is made from multiple laminations respectively comprised of reinforcing graphite in the form of woven fibers or elongated spaced fibers impregnated with an epoxy resin. The seal is made from an uncured resin in liquid form with hollow carbon microspheres mixed therein.

WO 99/51494 A1 discloses a structural joint for the transmission and control of high current flow in a carbon fiber or carbon fiber hybrid composite structure. The joint comprises at least two composite structures comprising a multiplicity of resin bonded carbon fiber plies and an adhesive applied therebetween and capable of conducting high currents. The adhesive comprises a conductive carrier film comprising carbon fibers wherein the electrical conductivity of the adhesive is comparable with that of the adjacent composite structures.

### SUMMARY OF INVENTION

### Technical Problem

In aircraft fuel tanks, bolts are used to fasten different materials to each other. In the event that the main wing is struck by lightning and a lightning current flows in an area fastened with such bolts, there is a risk that a spark will be generated between a fastening hole of the bolt and the bolt that is inserted into the fastening hole. Running fits that set the diameter of the fastening hole to be narrower than the diameter of the bolt, sleeved bolts in which a sleeve is installed in a hole formed in a material and the bolt is threaded into the sleeve, and the like have thus far been used to prevent sparks from being generated. Spreading a sealant on the bolt and then inserting the bolt into the hole is also sometimes done to fill gaps between the bolt and the fastening hole.

However, it is important to reduce resistance between the bolt and the material, and because the precision of the diameter of the fastening hole is directly related to lightning resistance performance, the requirements of quality control for the hole diameters become more demanding. This increases the time required for, and cost of, quality control.

Meanwhile, in the case where sleeved bolts are used, the sleeve is attached by fracturing the material surrounding the hole into which the sleeve is inserted, and thus the strength is weaker than in the case where normal bolts are used. The sleeves also increase the weight.

Note that the aforementioned problems occur not only when fastening a CFRP material to another CFRP material, but also when fastening CFRP to a metal material, and when a metal material is fastened to another metal material. Furthermore, the problems are not limited to integral tanks that form integral parts of the main wing of an aircraft, and also occur in fuel cell receptacles through which fuel flows. In the following descriptions, a fuel cell receptacle is also considered to be a type of fuel tank. Furthermore still, similar problems occur in aircraft fuselages that have fuel tanks and in moving bodies aside from aircraft, such as automobiles, that have fuel tanks mounted therein.

Having been achieved in light of such problems, it is an object of the present invention to provide a fuel tank, main wings, an aircraft fuselage, an aircraft, and a moving body capable of reducing working hours and costs involved in quality control and preventing weight increases.

### Solution to Problem

A fuel tank according to present invention includes the features of claim 1.

In addition, a fuel tank according to a second aspect of the present invention includes a structural member in which a fastening hole in which a bolt is fastened is formed, and a sealant imparted with conductivity applied between the bolt and the fastening hole.

A main wing according to a third aspect of the present invention includes the fuel tank described in the first or second aspect as a structure, and an aircraft fuselage according to a fourth aspect of the present invention includes the fuel tank described in the first or second aspect. An aircraft according to a fifth aspect of the present invention includes the main wing described in the third aspect or the aircraft fuselage described in the fourth aspect. Furthermore, a moving body according to a sixth aspect of the present invention includes the fuel tank described in the first or second aspect.

### Advantageous Effects of Invention

According to the present invention, resistance between the bolt and the structural member can be reduced in an area where the bolt is fastened, which makes it possible to simplify the management of a diameter when forming the fastening hole for the bolt; this in turn reduces working hours, costs, and the like involved in quality control and makes it possible to prevent an increase in weight.

### Brief Description of Drawings

FIG. 1 is a partially cutaway perspective view illustrating a main wing according to a first embodiment of the present invention.
FIG. 2 is a longitudinal cross-sectional view illustrating the main wing according to the first embodiment of the present invention.
FIG. 3 is an end view illustrating a flange of a rib according to the first embodiment of the present invention with respect to arrows III-III of in FIG. 5.
FIG. 4 is a partial longitudinal cross-sectional view illustrating an upper skin and the rib according to the first embodiment of the present invention, sectioned along line IV-IV line of FIG. 2.
FIG. 5 is a top view illustrating the flange of the rib according to the first embodiment of the present invention.
FIG. 6 is a top view illustrating a flange of a conventional rib.
FIG. 7 is a longitudinal cross-sectional view illustrating a fastened area in the flange of the rib according to the first embodiment of the present invention.
FIG. 8 is a graph illustrating a relative spark generation current (%) in each of test pieces.

### Description of Embodiments

An embodiment of the present invention will now be described with reference to the drawings.

### First Embodiment

First, the configuration of a main wing 1 of an aircraft according to the embodiment will be described.

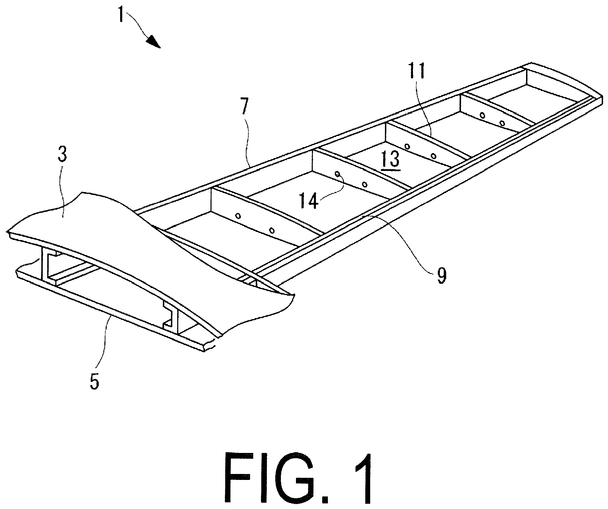

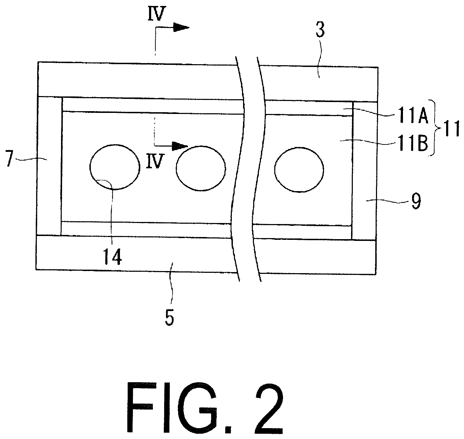

As illustrated in FIGS. 1 and 2, the main wing 1 includes an upper skin 3, a lower skin 5, a forward spar 7, a rear spar 9, a plurality of ribs 11, and the like.

The upper skin 3 and the lower skin 5 constitute the exterior of the main wing 1, and are thin plates also acting as aerodynamic surfaces. The upper skin 3 and the lower skin 5, along with the forward spar 7, the rear spar 9, and stringers (not illustrated) partially bear tensile loads and compressive loads acted on the main wing 1.

As illustrated in FIG. 1, the forward spar 7 and the rear spar 9 are structural members that extend in the lengthwise direction of the main wing 1, and are disposed between the upper skin 3 and the lower skin 5. A plurality of stringers are auxiliary members that extend in the lengthwise direction of the main wing 1 on the inner surface of the upper skin 3 or the lower skin 5 and are disposed between the forward spar 7 and the rear spar 9.

As illustrated in FIG. 1, the ribs 11 are structural members provided in the widthwise direction of the main wing 1, and are disposed between the upper skin 3 and the lower skin 5. Specifically, the ribs 11 are structural members extending in a direction roughly orthogonal to the forward spar 7 and the rear spar 9, and are plate-shaped members formed in the shape of the longitudinal cross-section of the main wing 1. As illustrated in FIGS. 1 and 2, a plurality of openings 14 are formed in the ribs 11 in the longitudinal direction.

In the main wing 1, the section surrounded by the forward spar 7, the rear spar 9, the upper skin 3, and the lower skin 5 is used as a fuel tank 13 in which fuel is stored. The fuel tank 13 uses structural parts of the aircraft itself as a receptacle, and is called an integral tank. The forward spar 7, the rear spar 9, the upper skin 3, the lower skin 5, and the ribs 11 are also structural members of the fuel tank 13. The fuel tank 13 has a liquid-tight structure that prevents fuel from leaking to the exterior.

A fuel pipe (not illustrated) for supplying fuel to the fuel tank 13, a plurality of fuel gauges (not illustrated) for detecting fuel level, wiring (not illustrated) for the fuel gauges, and the like are disposed within the fuel tank 13.

Next, the structural members of the fuel tank 13 will be described.

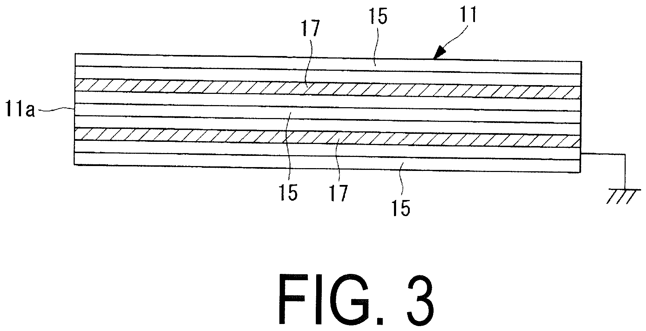

Carbon fiber reinforced plastic (CFRP) is used for the structural members of the fuel tank 13, i.e., the forward spar 7, the rear spar 9, the upper skin 3, the lower skin 5, and the ribs 11. The structural members according to the present embodiment that are used for the fuel tank 13 are formed by laminating a conductive sheet 17 between prepregs of CFRP 15 during manufacture. Accordingly, as illustrated in FIG. 3, the structural members have laminated structures formed from the CFRP 15 and the conductive sheet 17.

The CFRP 15 is constituted by a reinforcing material containing carbon fiber, a matrix containing plastic, and the like. Note that the matrix may or may not be imparted with conductivity. In the case where the matrix is imparted with conductivity, the CFRP 15 itself is also conductive.

The matrix includes a plastic such as a thermosetting resin, such as an unsaturated polyester or epoxy resin. Various techniques of imparting conductivity to a plastic such as a thermosetting resin or the like may be applied as the method of imparting the matrix with conductivity, and detailed description thereof will be omitted in the present specification. Methods of imparting the matrix with conductivity include, for example, including conductive particles or fibers in the plastic, or imparting the plastic itself with conductivity.

The conductive sheet 17 is a sheet-shaped member having a low electrical resistance. The conductive sheet 17 may or may not be made of a metal. A metal conductive sheet 17 is, for example, formed from copper, titanium, or the like, and has a uniform sheet shape lacking openings, a punched metal shape having openings, a mesh shape, or the like. A non-metal conductive sheet 17 is, for example, formed of carbon fiber or the like, and includes members formed as nonwoven fabrics, plain weaves similar to gauze, and the like. The carbon fiber may use carbon nanotubes.

Note, however, that a metal that forms a battery by making contact with the carbon in the CFRP 15, such as nickel or aluminum, is undesirable for use in the conductive sheet 17.

The conductive sheet 17 is connected to a spark location provided outside of the structural members, or in other words, to a location where lightning current ultimately flows.

Although FIG. 3 illustrates the ribs 11, a similar structure is used for other members as well. In the fuel tank 13, the entirety of the forward spar 7, the rear spar 9, the upper skin 3, the lower skin 5, and the ribs 11 need not be formed as structural members containing the CFRP 15, and may be partially formed from a metal such as an aluminum alloy.

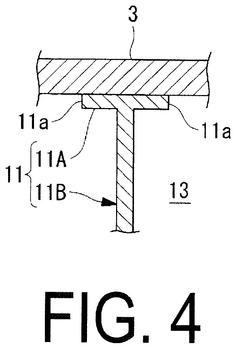

The structural members of the fuel tank 13 that are formed from the CFRP 15 and the conductive sheet 17 have cut surfaces formed by a cutting process exposed within the fuel tank 13 in which fuel is stored. For example, as illustrated in FIG. 4, in the case where each rib 11 has a flange 11A, a web 11B, and the like, a cut surface 11a is exposed within the fuel tank 13 at an end portion of each flange 11A.

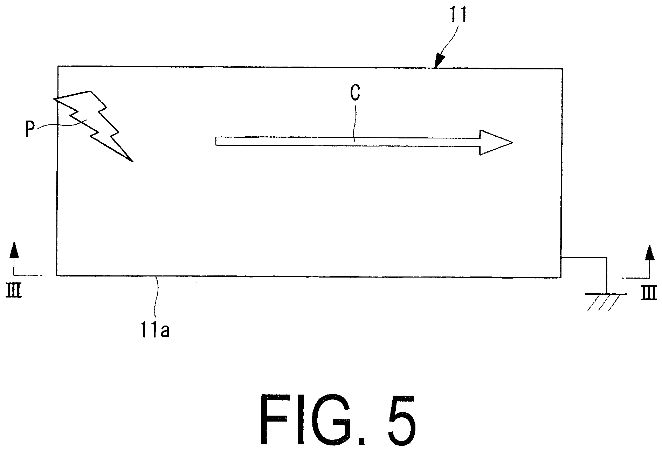

In the present embodiment, the conductive sheet 17, which has a high conductivity, is inserted into the structural members having the CFRP 15. Thus as illustrated in FIG. 5, when lightning strikes the rib 11 of the main wing 1 and a lightning current C flows through the structural member from a strike point P, the lightning current C flows through the conductive sheet 17 within that structural member as well. As a result, less lightning current C flows into the CFRP 15, and it is thus difficult for sparks to be generated at the cut surfaces 11a of the structural members.

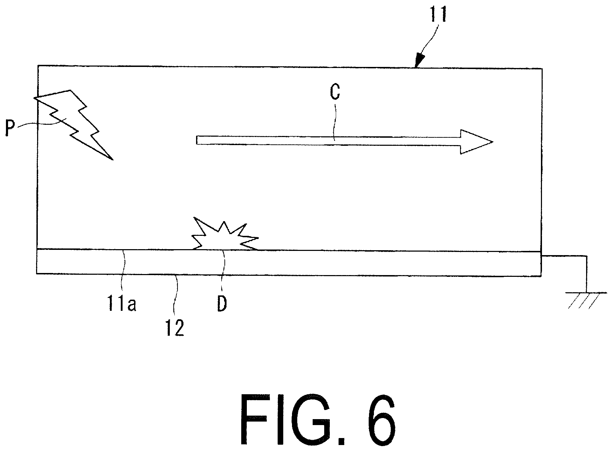

In the case in which, unlike the present embodiment, the conductive sheet 17 is not inserted into the structural member, when lightning strikes the rib 11 of the main wing 1 and the lightning current C flows along a surface of a CFRP component or the cut surface 11a from the strike point P as illustrated in FIG. 6, there is a risk of a spark D being generated between reinforcing materials at end portions of the reinforcing materials (see FIG. 6). Thus far, a method in which a sealant 12 or the like is applied to the surface of the CFRP component or the cut surfaces 11a as illustrated in FIG. 6, so as to trap generated current in the interior, has been employed as a measure against such sparks. However, the process of applying the sealant 12 increases the working hours and costs involved in the manufacture of the fuel tank 13. The weight of the main wing 1 also increases due to the sealant 12 being applied.

In contrast, according to the present embodiment, the conductive sheet 17 having a high conductivity is inserted into the structural members that have the CFRP 15, and thus sparks can be prevented from being generated at the cut surfaces 11a of the structural members even in the case where the cut surfaces 11a are exposed within the fuel tank 13. As a result, no sealant need be applied to the surfaces or cut surfaces 11a of the structural members, the method for applying the sealant can be simplified, and the like. The working hours and costs involved in manufacturing the fuel tank, quality control for the sealant application, and the like can therefore be reduced. The weight corresponding to the amount of the sealant can also be eliminated.

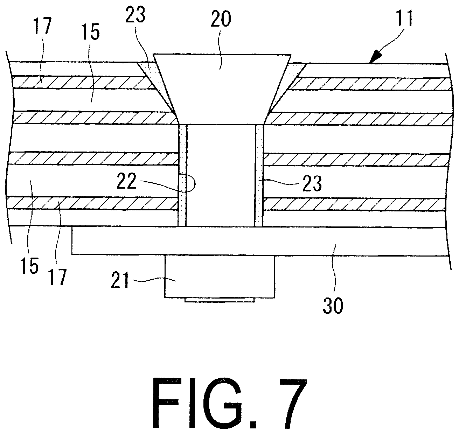

Next, a structure for fastening the aforementioned structural member having the CFRP 15 to a metal material 30 will be described with reference to FIG. 7.

A fastening hole 22 in which a bolt 20 is fastened is formed in the structural member having the CFRP 15. A conductive sealant 23 having conductivity is applied to the bolt 20, and the bolt 20 is then inserted into the fastening hole 22. As a result, the conductive sealant 23 is disposed between the bolt 20 and the fastening hole 22.

The structural member having the CFRP 15 and the metal material 30 are strongly fixed to each other by tightening a nut 21 onto the bolt 20. Note that a variety of techniques for imparting the sealant with conductivity can be employed as methods for manufacturing the conductive sealant 23, and detailed descriptions thereof will be omitted in this specification.

With such a fastening structure, the bolt 20 and the aforementioned conductive sheet 17 are electrically connected through the conductive sealant 23. This makes it possible to reduce resistance between the bolt 20 and the structural member having the CFRP 15, which in turn makes it possible to reduce or prevent the generation of sparks when lightning strikes. In particular, in the case in which a circular cone-shaped cavity that corresponds to the head section of the bolt 20 is formed in the fastening hole 22 and the structural member is formed so that the conductive sheet 17 is located in the cavity section, the distance between the bolt 20 and the conductive sheet 17 is reduced. In this case, the resistance between the bolt 20 and the structural member having the CFRP 15 can be reduced with certainty.

However, the structure is not limited to disposing the conductive sealant 23 between the bolt 20 and the fastening hole 22, and there may be regions in which the conductive sealant 23 is not disposed between the bolt 20 and the fastening hole 22. In such a case, the bolt 20 making physical contact with the aforementioned conductive sheet 17 makes it possible to reduce resistance between the bolt 20 and the structural member having the CFRP 15, which in turn makes it possible to reduce or prevent the generation of sparks when lightning strikes.

Accordingly, the diameter need not be formed to accommodate running fits as in conventional techniques, which makes it possible to simplify the management of the diameter when forming the fastening hole for the bolt; this in turn reduces working hours, costs, and the like involved in quality control and makes it possible to prevent an increase in weight. Furthermore, sleeved bolts need not be used, ensuring that there is no drop in strength; thus the same strength can be provided at a lighter weight.

Next, results of carrying out lightning resistance test on test pieces created according to the first embodiment of the present invention and a conventional example will be described.

In these experiments, a high-current waveform was applied to test pieces of a structural member having CFRP in which the conductive sheet 17 having conductivity is laminated (the present embodiment) and CFRP in which the conductive sheet 17 is not laminated (the conventional structure), and differences in current values when sparks were generated were compared.

The testing method for the lightning resistance test followed the "Conducted Current Test" in SAE International's "Aircraft Lightning Test Methods" (ARP5416). The high-current waveform applied to the test pieces was a simulated lightning current component A waveform as defined in ARP5412A.

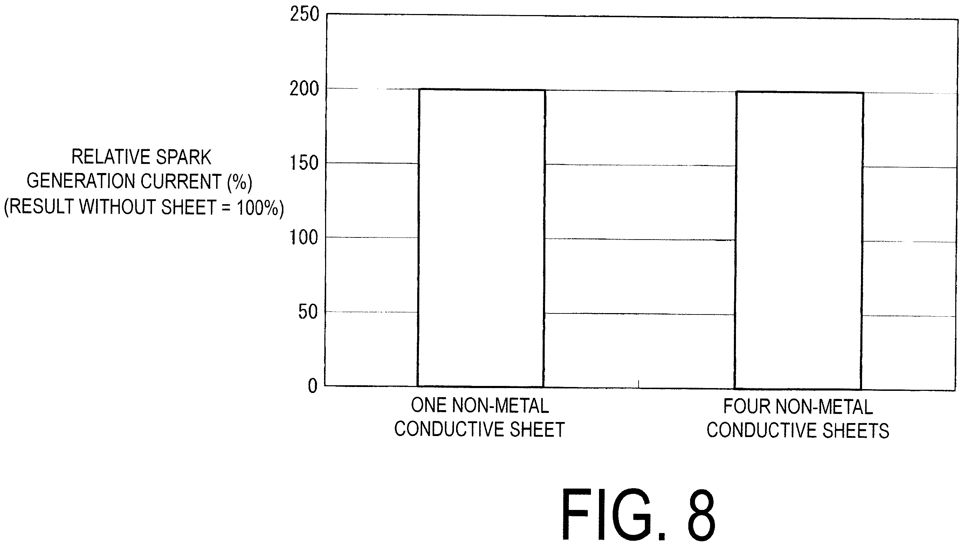

FIG. 8 is a graph illustrating a relative spark generation current (%) in each of the test pieces. The results indicated in FIG. 7 were obtained upon carrying out the lightning resistance test on a plurality of test pieces having different types of conductive sheets 17 or different numbers of conductive sheets 17 laminated therein. FIG. 8 illustrates a spark generation current value for each test piece as a percentage, assuming the spark generation current value of CFRP in which no conductive sheet is laminated is 100%.

A test piece in which a single non-metal conductive sheet 17 is laminated and a test piece in which four non-metal conductive sheets 17 are laminated were prepared as test pieces for a structural member having CFRP in which the conductive sheet 17 is laminated.

Results of the tests confirmed that the test piece according to the present embodiment provides an increased relative spark generation current and can suppress the generation of sparks due to lightning current when lightning strikes more than CFRP in which the conductive sheet 17 is not laminated.

Furthermore, the relative spark generation current had substantially the same value regardless of whether one or four sheets are provided in a laminated manner, and it was therefore confirmed that laminating at least one conductive sheet 17 in the CFRP can suppress sparks from being generated by lightning current when lightning strikes.

Although the aforementioned first embodiment of the present invention describes a case in which the conductive sheet 17 is laminated in structural members having the CFRP for situations in which CFRP and metal materials are fastened to each other, the present invention is not limited to this example. That is, rather than using CFRP in which the conductive sheet 17 is provided, the conductive sealant 23 may simply be applied between the bolt 20 and the fastening hole 22. Even in such a case, the resistance between the bolt 20 and the material of which the fastening hole 22 is formed can be reduced and the generation of sparks between the bolt 20 and the fastening hole 22 can be prevented.

In addition, although the aforementioned first embodiment of the present invention describes a case in which CFRP and metal materials are fastened to each other, the present invention is not limited to this example. That is, the present invention can be applied in cases in which CFRP materials are fastened to each other as well. Likewise, an invention of applying the conductive sealant 23 between the bolt 20 and the fastening hole 22 can be applied in cases in which metal materials are fastened to each other as well.

Furthermore, although the aforementioned embodiment describes the fuel tank 13, which is what is called an integral tank that is formed integrally with the main wing 1 of an aircraft, the present invention is not limited to this example. The present invention can also be applied in structural members used in fuel cell receptacles through which a fuel flows (fuel tanks), for example. The present invention can also be applied in structural members of fuel tanks disposed in the fuselage of an aircraft, and structural members of fuel tanks mounted in moving bodies aside from aircraft, such as automobiles.

### Reference Signs List

1 Main wing
3 Upper skin
5 Lower skin
7 Forward spar
9 Rear spar
11 Rib(s)
11a Cut surface
11A Flange
11B Web
12 Sealant
13 Fuel tank
15 CFRP
17 Conductive sheet

## Claims

1. A fuel tank (13) comprising
a structural member (3,4,7,9,11) that includes carbon-fiber-reinforced plastic including a reinforcing material containing carbon fiber and a matrix containing a plastic,
wherein the structural member (3,4,7,9,11) has a laminated structure formed from a conductive sheet (17) laminated between prepregs (15) of the carbon-fiber-reinforced plastic,
wherein the structural member (3,4,7,9,11) is formed with a fastening hole (22) in which a bolt (20) is fastened, and
wherein the structural member (3,4,7,9,11) is arranged such that a cut surface (11a) of the structural member (3,4,7,9,11) is exposed within an internal area of the fuel tank (13) in which fuel is to be stored.

2. The fuel tank (13) according to claim 1, further comprising a sealant (23) imparted with conductivity applied between the bolt (20) and the fastening hole (22).

3. The fuel tank (13) according to claim 1 or 2, wherein the conductive sheet (17) is made of a metal, preferably copper or titanium, and preferably has a uniform sheet shape without openings or a punched metal shape having openings or a mesh shape.

4. A main wing (1) comprising the fuel tank (13) described in claim 1, 2 or 3 as a structure.

5. An aircraft fuselage comprising the fuel tank (13) described in claim 1, 2 or 3.

6. An aircraft comprising one of the main wing (1) described in claim 4 and the aircraft fuselage described in claim 5.

7. A moving body comprising the fuel tank (13) described in claim 1, 2 or 3.

## Patentansprüche

1. Ein Kraftstofftank (13) mit:
einem Strukturelement (3,4,7,9,11), das einen Kohlefaser-verstärkten Kunststoff umfassend ein Verstärkungsmaterial enthaltend Kohlefaser und eine Matrix enthaltend einen Kunststoff aufweist,
wobei das Strukturelement (3,4,7,9,11) eine laminierte bzw. geschichtete Struktur besitzt, die aus einer leitfähigen Lage (17), welche zwischen Prepregs (15) des Kohlefaser-verstärkten Kunststoffs laminiert bzw. geschichtet ist, gebildet ist,
wobei das Strukturelement (3,4,7,9,11) mit einem Befestigungsloch (22) ausgebildet ist, in dem ein Bolzen (20) befestigt ist, und
wobei das Strukturelement (3,4,7,9,11) so angeordnet ist, dass eine Schnittoberfläche (11a) des Strukturelements (3,4,7,9,11) in einem Innenbereich des Kraftstofftanks (13), in dem Kraftstoff zu speichern ist, freiliegt.

2. Der Kraftstofftank (13) gemäß Anspruch 1, ferner mit einem Dichtungsmittel (23), dem Leitfähigkeit verliehen ist, das zwischen dem Bolzen (20) und dem Befestigungsloch (22) aufgebracht ist.

3. Der Kraftstofftank (13) gemäß Anspruch 1 oder 2, wobei die leitfähige Lage (17) aus einem Metall, vorzugsweise Kupfer oder Titan, hergestellt ist und vorzugsweise eine gleichmäßige Lagenform ohne Öffnungen oder eine gestanzte Metallform mit Öffnungen oder eine Maschenform besitzt.

4. Ein Haupttragfläche (1) mit dem Kraftstofftank (13) gemäß Anspruch 1, 2 oder 3 als eine Struktur.

5. Ein Flugzeugrumpf mit dem Kraftstofftank (13) gemäß Anspruch 1, 2 oder 3.

6. Ein Flugzeug mit einem von der Haupttragfläche (1) gemäß Anspruch 4 und dem Flugzeugrumpf gemäß Anspruch 5.

7. Ein beweglicher Körper mit dem Kraftstofftank (13) gemäß Anspruch 1, 2 oder 3.

## Revendications

1. Réservoir (13) à carburant, comprenant
un élément (3, 4, 7, 9, 11) de structure, qui comprend de la matière plastique renforcée par de la fibre de carbone, comprenant une matière de renfort contenant de la fibre de carbone et une matrice contenant une matière plastique,
dans lequel l'élément (3, 4, 7, 9, 11) de structure a une structure stratifiée, formée d'une feuille (17) conductrice, stratifiée entre des pré-imprimés (15) de la matière plastique renforcée par de la fibre de carbone,
dans lequel l'élément (3, 4, 7, 9, 11) de structure est formé en ayant un trou (12) de fixation, dans lequel un boulon (20) est fixé et
dans lequel l'élément (3, 4, 7, 9, 11) de structure est disposé de manière à mettre à découvert une surface (11a) découpée de l'élément (3, 4, 7, 9, 11) de structure dans une région intérieure du réservoir (13) à carburant, dans lequel du carburant doit être stocké.

2. Réservoir (13) à carburant suivant la revendication 1, comprenant, en outre, un agent (23) d'étanchéité, imparti de conductivité, appliqué entre le boulon (20) et le trou (22) de fixation.

3. Réservoir (13) à carburant suivant la revendication 1 ou 2, dans lequel la feuille (17) conductrice est en un métal, de préférence en cuivre ou en titane, et a de préférence une forme de feuille uniforme sans ouverture ou une forme de métal perforé ayant des ouvertures ou une forme à mailles.

4. Aile (1) principale, comprenant le réservoir (13) à carburant décrit à la revendication 1, 2 ou 3 comme structure.

5. Fuselage d'aéronef, comprenant le réservoir (13) à carburant décrit à la revendication 1, 2 ou 3.

6. Aéronef, comprenant l'un de l'aile (1) principale décrite à la revendication 4 et de fuselage d'aéronef décrit à la revendication 5.

7. Corps en mouvement, comprenant le réservoir (13) à carburant décrit à la revendication 1, 2 ou 3.
